(19) Europäisches Patentamt
European Patent Office
Office européen des brevets

(11) EP 4 227 088 B1

(12) EUROPEAN PATENT SPECIFICATION

(45) Date of publication and mention of the grant of the patent:
**15.04.2026 Bulletin 2026/16**

(21) Application number: **21877621.9**

(22) Date of filing: **05.10.2021**

(51) International Patent Classification (IPC):
***B32B 27/30** (2006.01)* ***B32B 27/40** (2006.01)*
***C08F 299/06** (2006.01)* ***C09D 175/14** (2006.01)*
***C08G 18/08** (2006.01)* ***C08G 18/46** (2006.01)*
***C08G 18/67** (2006.01)* ***C08G 18/79** (2006.01)*
***C08F 290/06** (2006.01)* ***C08G 18/38** (2006.01)*
***C08G 18/42** (2006.01)* ***C09D 175/16** (2006.01)*
***C08J 7/04** (2020.01)* ***C08J 7/046** (2020.01)*
***C08J 7/043** (2020.01)*

(52) Cooperative Patent Classification (CPC):
(C-Sets available)
**C08G 18/4277; C08F 290/067; C08G 18/3851; C08G 18/4661; C08G 18/672; C08G 18/792; C08J 7/0427; C08J 7/043; C08J 7/046; C09D 175/16;** C08J 2367/02; C08J 2475/16
(Cont.)

(86) International application number:
**PCT/JP2021/036830**

(87) International publication number:
**WO 2022/075322 (14.04.2022 Gazette 2022/15)**

(54) **CURABLE COMPOSITION AND CURED PRODUCT THEREOF**

HÄRTBARE ZUSAMMENSETZUNG UND GEHÄRTETES PRODUKT DARAUS

COMPOSITION DURCISSABLE ET PRODUIT DURCI À BASE DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2020 JP 2020169881**

(43) Date of publication of application:
**16.08.2023 Bulletin 2023/33**

(73) Proprietor: **Daicel Corporation
Osaka 530-0011 (JP)**

(72) Inventors:
- **KAMADA, Takeru
Tokyo 108-8230 (JP)**
- **MAETSU, Naritoshi
Tokyo 108-8230 (JP)**
- **WATANABE, Jun
Tokyo 108-8230 (JP)**

(74) Representative: **Grünecker Patent- und Rechtsanwälte
PartG mbB
Leopoldstraße 4
80802 München (DE)**

(56) References cited:
**EP-A1- 2 143 739**
**WO-A1-2018/155548**
**JP-A- 2013 001 897**
**JP-A- 2016 037 609**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 227 088 B1

(52) Cooperative Patent Classification (CPC): (Cont.)

C-Sets
**C08G 18/672, C08G 18/42**

## Description

### Technical Field

The present disclosure relates to a curable composition for a decorative film and a cured product thereof. The present disclosure claims priority from the Japanese patent application No. 2020-169881, filed in Japan on October 7, 2020.

### Background Art

Polyurethane resins have flexibility, elasticity, and strength. Thus, compositions for polyurethane resin molding are used in coating agents and the like. For example, for the coating agents used to cover plastic substrates constituting vehicle parts, electronic devices, and the like, capability of forming a coating film having adhesion to a substrate, hardness, and scratch resistance properties is required.

Examples of such a coating agent include compositions described in Patent Documents 1, 2, and 3. Patent Document 4 discloses a coating composition includeing a specified polyol compound (A); a polyisocyanate compound (B); and resin-coated silica particle (C) obtained by mixing a specified hydroxy group-containing acrylic resin (C1) and silica particle (C2) and heating the mixture at 80°C or more, wherein the amount of the silica particle (C2) constituting the resin-coated silica particle (C) is adjusted to fall into the range of 10 to 60 mass%, with reference to the total solid content of the polyol compound (A), the polyisocyanate compound (B) and the resin-coated silica particle (C).

### Citation List

### Patent Document

Patent Document 1: JP 04-130119 A
Patent Document 2: JP 2011-137145 A
Patent Document 3: JP 2015-530295 A
Patent Document 4: JP 2013-001897 A

### Summary of Invention

### Technical Problem

From a coating agent containing a solvent, the solvent volatilizes in the process of forming a film, but this is not preferred because the solvent can cause health hazard and air pollution.

Furthermore, in recent years, as a method to cover a substrate constituting vehicle parts, electronic devices, and the like for both decoration and reinforcement, an in-mold molding method and a three-dimensional surface decoration molding method, which use a coating agent formed in a film form (i.e., film coating agent), have been known. The film coating agent used in the methods is required to conform easily to height difference and to form a coating film that is closely adhered to a substrate when the film coating agent is allowed to conform closely to the shapes of the recess and protrusion of the substrate and is subjected to curing.

Furthermore, the coating film obtained by using the composition described in Patent Documents listed above may undergo deterioration of appearance due to whitening and remaining of traces of a chemical liquid when a hand stained with a chemical such as sunscreen has contacted the coating film.

An object of the present disclosure is to provide a curable composition capable of forming a coating film having: adhesion to a substrate surface; hardness; scratch resistance; and chemical resistance.

Another object of the present disclosure is to provide a curable composition capable of forming an active energy ray curable film capable of providing a coating film that can easily conform to a substrate surface, and has excellent adhesion to the substrate surface, excellent hardness, excellent scratch resistance, and excellent chemical resistance.

Another object of the present disclosure is to provide the curable composition having excellent applicability without addition of any solvent.

Another object of the present disclosure is to provide a cured product of the curable composition.

Another object of the present disclosure is to provide an active energy ray curable film capable of providing a coating film that can easily conform to a substrate surface and has excellent adhesion to the substrate surface, hardness, scratch resistance, and chemical resistance by an active energy ray irradiation, and a cured product thereof.

Another object of the present disclosure is to provide a method for producing the active energy ray curable film.

Another object of the present disclosure is to provide a plastic molded product in which at least a portion of a substrate surface is covered with a coating film having excellent adhesion, hardness, scratch resistance, and chemical resistance.

Another object of the present disclosure is to provide a method for producing the plastic molded product.

Solution to Problem

As a result of diligent research to solve the issues described above, the present inventors found the following.

1. A polyurethane resin obtained by reacting a polyol compound (A) having an isocyanurate skeleton and a polyisocyanate compound (C) having an isocyanurate skeleton (= compound having an isocyanurate skeleton and an isocyanate group besides the isocyanurate skeleton) achieves excellent hardness, scratch resistance, and chemical resistance.
2. A composition obtained by adding an acrylic compound (B) having a hydroxy group, in the polyol compound (A) and the polyisocyanate compound (C), has a low viscosity and achieves excellent applicability without addition of any solvent.
3. A composition obtained by adding an acrylic compound (B) having a hydroxy group, in the polyol compound (A) and the polyisocyanate compound (C), can form a cured product by a two-step curing reaction of thermosetting and photocuring. That is, dual curability is provided.
4. A semi-cured product obtained by thermosetting the composition having dual curability can easily conform to height difference, and can form a coating film having excellent adhesion to recesses and protrusions of a substrate, hardness, scratch resistance, and chemical resistance when the semi-cured product is allowed to conform closely to the shapes of the recesses and protrusions of the substrate and the semi-cured product is then subjected to photocuring.

The present disclosure has been completed based on these findings. The invention is set out in the appended set of claims.

Advantageous Effects of Invention

The composition of the present disclosure contains the polyol compound (A), the acrylic compound (B), and the polyisocyanate compound (C). Thus, the composition has dual curability, and a urethane bonding reaction of hydroxy group and isocyanate group proceeds when the composition is subjected to heat treatment; however, a radical polymerization reaction of a (meth)acryloyl group does not proceed. Thus, a semi-cured product having active energy ray curability can be obtained.

The semi-cured product can easily conform to height difference. By performing a light irradiation treatment after setting the semi-cured product to conform to the shapes of the recesses and protrusions of a substrate, a radical polymerization reaction of the (meth)acryloyl group proceeds. Thus, a cured product closely adhered to a substrate can be formed. Furthermore, the cured product thus formed has excellent hardness, scratch resistance, and chemical resistance.

Because the composition has the characteristics described above, even when thermosetting conditions (e.g., curing temperature and curing time) are not strictly adjusted, a semi-cured product can be formed in a high yield. Thus, a film made of the semi-cured product is suitable as a film coating agent for decorative and/or hard coating (especially, a film coating agent for decorative and/or hard coating by an in-mold molding method or a three-dimensional surface decoration molding method).

Furthermore, the composition has a low viscosity even when no solvent is contained. With the use of the composition, a coating agent having excellent usability (specifically, a coating agent having excellent applicability as well as being environmentally friendly and having excellent safety) can be provided.

A plastic molded product having a coating film made of a cured product of the composition in at least a part of a substrate surface has a high surface hardness and excellent scratch resistance and scratch recovery. Furthermore, the coating film has excellent adhesion and, for example, even when a hand contaminated with a chemical such as sunscreen has contacted the coating film, the coating film does not peel off due to the chemical entering into a gap between the substrate and the coating film. Furthermore, because the coating film has excellent chemical resistance, for example, even when a hand contaminated with a chemical such as sunscreen has contacted the coating film, the coating film does not become cloudy and no traces of the chemical liquid are left. Thus, the plastic molded product of the present disclosure can maintain excellent appearance for a long period of time.

Description of Embodiments

Curable Composition

The curable composition of the present disclosure contains the polyol compound (A), the acrylic compound (B), and the polyisocyanate compound (C). The curable composition of the present disclosure may contain an additional component besides the above components.

Polyol compound (A)

The polyol compound (A) is a compound having a plurality of hydroxy groups. The number of hydroxy groups contained in the polyol compound (A) is, for example, 2 or more, preferably from 2 to 4, and particularly preferably 3 to 4. The polyol compound (A) also has an isocyanurate skeleton. Thus, the resulting cured product has a high crosslinking density and exhibits excellent hardness, scratch resistance, and chemical resistance.

The polyol compound (A) is, for example, a compound (a) represented by Formula (1) below.

[Chem. 6]

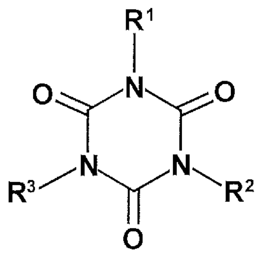

(1)

In the formula, $R^1$ to $R^3$ are identical or different and are each a group represented by Formula (1a) below.

[Chem. 7]

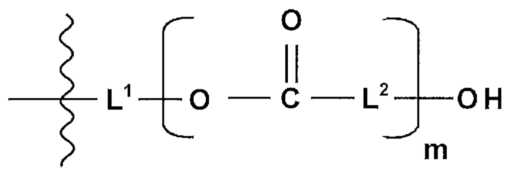

(1a)

In Formula (1a), $L^1$ and $L^2$ are identical or different and each represent an alkylene group having from 1 to 10 carbons, and m represents a number of 0 or greater. However, m in $R^1$ to $R^3$ are not simultaneously 0. A bond with a wavy line bonds to a nitrogen atom in the formula.

Examples of the alkylene group having from 1 to 10 carbons include linear or branched alkylene groups, such as a methylene group, a methylmethylene group, a dimethylmethylene group, an ethylene group, a propylene group, a trimethylene group, a butylene group, a 1-methyltrimethylene group, a 2-methyltrimethylene group, a 1,1'-dimethylethylene group, a pentylene group, a hexylene group, a heptylene group, an octylene group, a 2-ethylhexylene group, a nonylene group, and a decylene group.

$L^1$ is preferably an alkylene group having from 1 to 3 carbons. Furthermore, $L^1$ is preferably a linear alkylene group.

$L^2$ is preferably an alkylene group having from 1 to 8 carbons, and is particularly preferably an alkylene group having from 4 to 6 carbons. Furthermore, $L^2$ is preferably a linear alkylene group.

In Formula (1a), m is an average value of the degree of polymerization of the unit indicated in parentheses in formula (1a), and m is a number of 0 or greater. m is, for example, from 0 to 7 and, from the viewpoints of making the network structure highly dense by shortening the distance between crosslinking points of the obtained cured product and improving chemical resistance, m is preferably from 0 to 4, more preferably from 0 to 3, even more preferably greater than 0 and 3 or less, particularly preferably greater than 0 and 2 or less, and most preferably from 1 to 2.

The number average molecular weight (Mn; calibrated with polystyrene standard) of the compound (a) is, for example, less than 800 and, from the viewpoints of making the network structure highly dense by shortening the distance

between crosslinking points of the obtained cured product and improving chemical resistance, the number average molecular weight is preferably from 570 to 630, more preferably from 580 to 620, and particularly preferably from 590 to 615.

In addition, a molecular weight dispersity (weight average molecular weight Mw/number average molecular weight Mn) of the compound (a) is preferably from 1.0 to 1.5, more preferably from 1.0 to 1.3, and even more preferably from 1.0 to 1.2.

Note that the number average molecular weight and the molecular weight dispersity of the compound (a) can be measured with instruments and conditions described in Examples below.

The hydroxyl value (KOH mg/g) of the compound (a) is, for example, from 200 to 400, and in particular, from the viewpoint of improving the hardness, scratch resistance, and chemical resistance of the resulting cured product, the hydroxyl value is preferably from 260 to 300, more preferably from 270 to 290, and even more preferably from 275 to 285. Note that the hydroxyl value can be measured by the hydroxyl value measurement method described in JIS-K 1557.

The compound (a) can be produced, for example, by ring-opening polymerization of the lactone using the hydroxyl group of Formula (1') below as a starting point. $L^1$ in Formula (1') is identical to $L^1$ in Formula (1a). The three $L^1$ moieties in Formula (1') may be identical or different.

[Chem. 8]

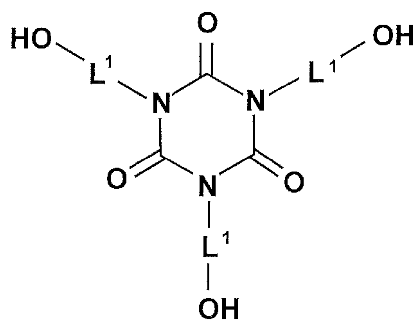

(1')

Examples of the lactone include α-acetolactone, β-propiolactone, γ-butyrolactone, δ-valerolactone, and ε-caprolactone.

The curable composition of the present disclosure may contain one type of the polyol compound (A) alone, or a combination of two or more types thereof.

Acrylic compound (B)

The acrylic compound (B) is a compound containing a hydroxy group and a (meth)acryloyl group. The acrylic compound (B) is, for example, a compound (b') represented by Formula (2') below.

[Chem. 9]

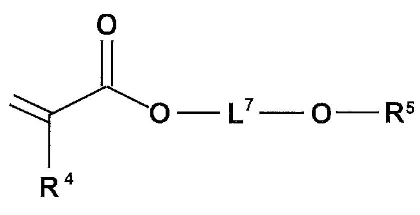

(2')

In the formula, $L^7$ represents an alkylene group having from 1 to 10 carbons, $R^4$ is H or $CH_3$, and $R^5$ is H or a group represented by Formula (2a) below.

[Chem. 10]

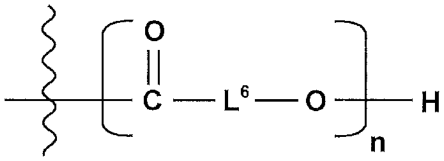

(2a)

In Formula (2a), $L^6$ moieties are identical or different and each represent an alkylene group having from 1 to 10 carbons, and n represents a number of 0 or greater. A bond with a wavy line bonds to an oxygen atom in Formula (2').

The acrylic compound (B) may be a compound (b) represented by Formula (2) below. $R^4$ and $R^5$ in the formula below are identical to those described above.

[Chem. 11]

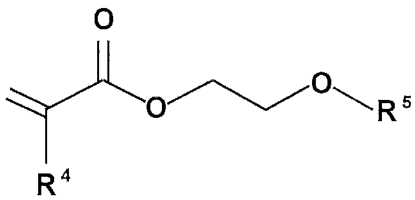

(2)

The acrylic compound (B) may be a compound (b") represented by Formula (2") below.

[Chem. 12]

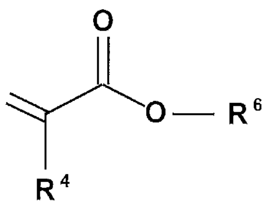

(2")

In the formula, $R^4$ is H or $CH_3$. $R^6$ is a group represented by Formula (2b) below.

[Chem. 13]

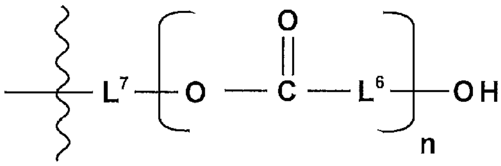

(2b)

In Formula (2b), $L^6$ and $L^7$ are identical or different and each represent an alkylene group having from 1 to 10 carbons, and n represents a number of 0 or greater. A bond with a wavy line bonds to an oxygen atom in Formula (2").

Examples of the alkylene group having from 1 to 10 carbons of $L^6$ and $L^7$ includes identical examples as the alkylene group having from 1 to 10 carbons of $L^1$ and $L^2$.

In particular, $L^6$ is preferably an alkylene group having from 1 to 8 carbons, and particularly preferably an alkylene group having from 4 to 6 carbons. Furthermore, $L^6$ is preferably a linear alkylene group.

$L^7$ is more preferably an alkylene group having from 1 to 8 carbons, even more preferably an alkylene group having from 1 to 6 carbons, particularly preferably an alkylene group having from 2 to 4 carbons, and especially preferably an alkylene group having 2 carbons (especially, an ethylene group). Furthermore, $L^7$ is preferably a linear alkylene group.

n is an average value of the degree of polymerization of the unit indicated in parentheses in the formula, and n is a number of 0 or greater. n is, for example, from 0 to 7. From the viewpoints of making the network structure highly dense by shortening the distance between crosslinking points of the obtained cured product and improving chemical resistance, the upper limit of n is preferably 4, more preferably 3, and particularly preferably 2. Furthermore, from the viewpoint of improving stretchability of the resulting semi-cured product, n is preferably greater than 0, more preferably 0.2 or greater, even more preferably 0.5 or greater, particularly preferably 0.75 or greater, and most preferably 1 or greater.

In particular, the group represented by Formula (2b) above is preferably the group identical to the group represented by Formula (1a) of the compound (a) from the viewpoint of obtaining a cured product having scratch recovery property by making the distance between crosslinking points uniform.

The number average molecular weight (Mn, calibrated with polystyrene standards) of the acrylic compound (B) is preferably 600 or less, more preferably from 250 to 500, and even more preferably from 300 to 400.

In addition, a molecular weight dispersity (weight average molecular weight Mw/number average molecular weight Mn) of the acrylic compound (B) is preferably from 1.0 to 1.8, more preferably from 1.0 to 1.6, and even more preferably from 1.0 to 1.5.

Note that the number average molecular weight and the molecular weight dispersity of the acrylic compound (B) can be measured by the methods identical to the methods of measuring the number average molecular weight and the molecular weight dispersity of the compound (a).

The hydroxyl value (KOH mg/g) of the acrylic compound (B) is, for example, from 100 to 300, and preferably from 140 to 180, more preferably from 150 to 170, and even more preferably from 155 to 165. Note that the hydroxyl value can be measured by the hydroxyl value measurement method described in JIS-K 1557.

The viscosity of the acrylic compound (B) at a rotation speed of 20/s at 25°C is, for example, 1000 mPa·s or less, preferably from 50 to 500 mPa·s, particularly preferably from 50 to 300 mPa·s, most preferably from 50 to 200 mPa·s, and especially preferably from 50 to 150 mPa·s, from the viewpoint of making the curable composition to be solventless by reducing the viscosity of the curable composition.

The curable composition of the present disclosure may contain one type of the acrylic compound (B) alone, or a combination of two or more types thereof.

The curable composition of the present disclosure may contain another acrylic compound besides the acrylic compound (B) (= a compound having a (meth)acryloyl group); however, from the viewpoint of achieving a low viscosity and making the curable composition to be solventless and from the viewpoint of improving the hardness, scratch resistance, and chemical resistance of the resulting cured product, the proportion of the acrylic compound (B) with respect to the total amount of the acrylic compounds contained in the curable composition is preferably 60 wt.% or greater, more preferably 70 wt.% or greater, particularly preferably 80 wt.% or greater, and most preferably 90 wt.% or greater.

Polyisocyanate compound (C)

The polyisocyanate compound (C) is a compound having an isocyanurate skeleton. The polyisocyanate compound (C) has an isocyanate group besides the isocyanurate skeleton. Thus, the resulting cured product has a high crosslinking density and exhibits excellent hardness, scratch resistance, and chemical resistance.

The polyisocyanate compound (C) is, for example, a compound (c) represented by Formula (3) below.

[Chem. 14]

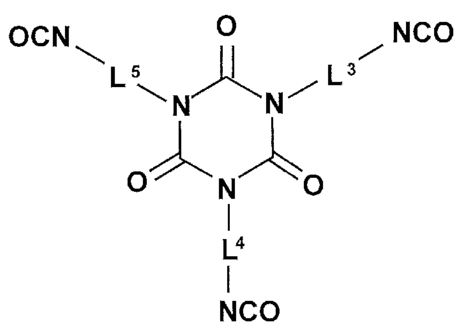

(3)

In Formula (3), $L^3$ to $L^5$ are identical or different and each represent an alkylene group having from 1 to 10 carbons.

Examples of the alkylene group having from 1 to 10 carbons of $L^3$ to $L^5$ in Formula (3) includes identical examples

as the alkylene group having from 1 to 10 carbons of $L^1$ and $L^2$.

In particular, $L^3$ to $L^5$ are each preferably an alkylene group having from 3 to 8 carbons. Furthermore, $L^3$ to $L^5$ are each preferably a linear alkylene group.

The NCO content in the polyisocyanate compound (C) is, for example, from 17 to 25 wt.%, preferably from 18 to 24 wt.%, and more preferably from 19 to 23 wt.%.

The curable composition of the present disclosure may contain one type of the polyisocyanate compound (C) alone, or a combination of two or more types thereof.

The curable composition of the present disclosure may contain another isocyanate compound besides the polyisocyanate compound (C) (i.e., a compound having an isocyanate group); however, from the viewpoint of improving the hardness, scratch resistance, and chemical resistance of the resulting cured product, the proportion of the polyisocyanate compound (C) with respect to the total amount of the isocyanate compounds contained in the curable composition is preferably 60 wt.% or greater, more preferably 70 wt.% or greater, particularly preferably 80 wt.% or greater, and most preferably 90 wt.% or greater.

Examples of the additional isocyanate compound include aliphatic polyisocyanates, such as 1,6-hexamethylene diisocyanate, 2,2,4-trimethylhexamethylene diisocyanate, and 2,4,4-trimethylhexamethylene diisocyanate; trimers of the aliphatic polyisocyanates (excluding the polyisocyanate compound (C)); allophanates, biurets, or adducts of the aliphatic polyisocyanates; aromatic polyisocyanates, such as tolylene diisocyanate, xylylene diisocyanate, and diphenylmethane diisocyanate; alicyclic polyisocyanates, such as polyisocyanates obtained by hydrogenating an aromatic polyisocyanate, 4,4'-dicyclohexylmethane diisocyanate, and isophorone diisocyanate; and trimers, allophanates, biurets, or adducts of the aromatic polyisocyanates or the alicyclic polyisocyanates.

The content of the acrylic compound (B) in the curable composition is, for example, from 1 to 70 parts by weight with respect to 100 parts by weight of the polyol compound (A). The upper limit of the content of the acrylic compound (B) is preferably 65 parts by weight, more preferably 60 parts by weight, particularly preferably 50 parts by weight, most preferably 40 parts by weight, and especially preferably 25 parts by weight, from the viewpoint of obtaining a semi-cured product having excellent stretchability while the hardness, scratch resistance, and chemical resistance of the resulting cured product are maintained. Furthermore, the lower limit of the content of the acrylic compound (B) is preferably 3 parts by weight, particularly preferably 5 parts by weight, most preferably 10 parts by weight, and especially preferably 12 parts by weight, from the viewpoint of obtaining a composition having excellent applicability without addition of any solvent and from the viewpoint of obtaining a semi-cured product having adequate stretchability to exhibit excellent conformity to height difference.

In the curable composition, the molar ratio of hydroxy groups of the polyol compound (A) to hydroxy groups of the acrylic compound (B) (former/latter) is, for example, from 1.5 to 50. The lower limit of the molar ratio is preferably 2.0, particularly preferably 4.0, and most preferably 5.0, from the viewpoint that a semi-cured product has excellent stretchability while the hardness, scratch resistance, and chemical resistance of the resulting cured product are maintained. Furthermore, the upper limit of the molar ratio is preferably 30, more preferably 20, even more preferably 15, particularly preferably 12, and especially preferably 10, from the viewpoint of obtaining a composition having excellent applicability without addition of any solvent and from the viewpoint of obtaining a semi-cured product having adequate stretchability to exhibit excellent conformity to height difference. The content of the hydroxy groups of the polyol compound (A) is less than the range described above, the stretchability of a semi-cured product tends to decrease. On the other hand, when the content of the hydroxy groups of the acrylic compound (B) is less than the range described above, dual curability decreases, and it tends to be difficult to obtain a semi-cured product.

The curable composition may contain a hydroxy group-containing compound besides the polyol compound (A) and the acrylic compound (B) (i.e., a compound containing at least one hydroxy group); however, the total proportion of the polyol compound (A) and the acrylic compound (B) with respect to the total amount of the hydroxy group-containing compound contained in the curable composition is, for example, 60 wt.% or greater, preferably 70 wt.% or greater, more preferably 80 wt.% or greater, particularly preferably 90 wt.% or greater, and most preferably 95 wt.% or greater.

The content of the isocyanate compound (C) in the curable composition is preferably from 40 to 160 parts by weight, more preferably from 70 to 150 parts by weight, and even more preferably from 100 to 140 parts by weight, with respect to 100 parts by weight the polyol compound (A) from the viewpoint of improving the hardness, scratch resistance, and chemical resistance of the resulting cured product.

The content of the acrylic compound (B) in the curable composition is preferably from 1 to 60 parts by weight, more preferably from 5 to 40 parts by weight, and even more preferably from 8 to 20 parts by weight, with respect to 100 parts by weight total of the polyol compound (A), the acrylic compound (B), and the polyisocyanate compound (C) from the viewpoint of improving stretchability of the resulting semi-cured product without significantly reducing the hardness, scratch resistance, and chemical resistance of the resulting cured product.

The equivalent ratio (NCO/OH) of NCO groups of the polyisocyanate compound (C) to OH groups in the polyol compound (A) and the acrylic compound (B) in the curable composition is preferably in a range from 0.2 to 2.0, more preferably from 0.5 to 1.5, even more preferably from 0.7 to 1.3, and particularly preferably from 0.9 to 1.2, from the

viewpoint of improving the hardness, scratch resistance, and chemical resistance of the resulting cured product.

The total content of the polyol compound (A), the acrylic compound (B), and the isocyanate compound (C) with respect to the total weight (100 wt.%) of non-volatile components in the curable composition is, for example, 80 wt.% or greater, preferably 85 wt.% or greater, and even more preferably 90 wt.% or greater.

The curable composition may contain one type or two or more types of other components as necessary besides the polyol compound (A), the acrylic compound (B), and the polyisocyanate compound (C), and preferably contains a photopolymerization initiator and a surface modifier.

Photopolymerization initiator (D)

The photopolymerization initiator (D) is not particularly limited and can be selected and used based on the purpose. Examples of the photopolymerization initiator (D) include 1-hydroxycyclohexyl phenyl ketone, 2-hydroxy-2-methyl-1-phenylpropan-1-one, diethoxyacetophenone, 1-(4-isopropylphenyl)-2-hydroxy-2-methylpropan-1-one, 1-(4-dodecylphenyl)-2-hydroxy-2-methylpropan-1-one, 4-(2-hydroxyethoxy)-phenyl(2-hydroxy-2-propyl)ketone, 2-methyl-1-[4-(methylthio)phenyl]-2-morpholinopropane-1, benzoin, benzoin methyl ether, benzoin ethyl ether, benzoin isopropyl ether, benzoin n-butyl ether, benzoin phenyl ether, benzil dimethyl ketal, benzophenone, benzoylbenzoic acid, methyl benzoylbenzoate, 4-phenylbenzophenone, hydroxybenzophenone, acrylated benzophenone, 4-benzoyl-4'-methyldiphenylsulfide, 3,3'-dimethyl-4-methoxybenzophenone, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, 2,4,6-trimethylbenzoyldiphenylphosphine oxide, methyl phenylglyoxylate, benzil, and camphorquinone. Specific examples of the photopolymerization initiator (D) include trade name "Irgacure 1173" (2-hydroxy-2-methyl-1-phenylpropanone, available from IGM Resins B.V.). One type of these may be used alone, or two or more types thereof may be used in combination.

The content of the photopolymerization initiator (D) is from 1 to 5 parts by weight with respect to the total amount (100 parts by weight) of the polyol compound (A), the acrylic compound (B), and the polyisocyanate compound (C). When the used amount of the photopolymerization initiator (D) is from 1 to 5 parts by weight, curing can be adequately performed.

Furthermore, the content of the photopolymerization initiator (D) is, for example, from 1 to 5 parts by weight with respect to 10 parts by weight of the acrylic compound (B).

Surface modifier

Examples of the surface modifier include a polysiloxane derivative (E). When a surface modifier is added to the curable composition, an effect of making a coating film surface smooth can be achieved.

Examples of the polysiloxane derivative (E) include compounds having a polydimethylsiloxane skeleton. Among these, a polyether-modified polydimethylsiloxane is preferred, and a poly $C_{2-4}$ alkylene oxide-added polydimethylsiloxane such as polyethylene oxide-added polydimethylsiloxane or polypropylene oxide-added polydimethylsiloxane is particularly preferred.

The content of the polysiloxane derivative (E) is, for example, from 0.1 to 0.5 parts by weight with respect to 100 parts by weight total of the polyol compound (A), the acrylic compound (B), and the polyisocyanate compound (C).

Other Components

The curable composition may further contain one type or two or more types of other components. Examples of such other components include inorganic particles, surfactants, pigments, dyes, ultraviolet absorbers, light stabilizers, antifoaming agents, wetting agents, dispersants, viscoelasticity modifiers, thixotropy-imparting agents, antiseptics, film-forming agents, plasticizers, penetrants, perfumes, bactericides, fungicides, ultraviolet absorbers, antioxidants, antistatic agents, flame retardants, matting agents, tactile sensation improvers, and design-imparting agents.

Inorganic particle

Examples of the inorganic particles include silica, alumina, mica, synthetic mica, talc, calcium oxide, calcium carbonate, zirconium oxide, titanium oxide, barium titanate, kaolin, bentonite, diatomaceous earth, boron nitride, aluminum nitride, silicon carbide, zinc oxide, cerium oxide, cesium oxide, magnesium oxide, glass beads, glass fibers, graphite, carbon nanotubes, calcium hydroxide, magnesium hydroxide, and aluminum hydroxide. Of these, a single type may be used alone, or two or more types thereof may be used in combination.

From the viewpoint of improving chemical resistance and scratch resistance of the coating film, the inorganic particles are preferably silica.

The particle sizes of the inorganic particles are not particularly limited but are, for example, preferably from 0.01

nm to 1 $\mu$m from the viewpoint of good appearance.

The content of such other components is not particularly limited but is preferably 10 wt.% or less with respect to the total weight (100 wt.%) of non-volatile components of the curable composition.

Furthermore, from the viewpoint of reducing environmental burden, in the curable composition, the content of a solvent is preferably 1 wt.% or less, more preferably 0.5 wt.% or less, and even more preferably 0.1 wt.% or less, with respect to the total weight (100 wt.%) of non-volatile components. The curable composition especially preferably contains substantially no solvent.

The curable composition has a low viscosity because the curable composition contains a combination of the polyol compound (A) and the acrylic compound (B) as hydroxy group-containing compounds. Thus, the curable composition has excellent applicability even when the content of the solvent is in the range described above.

The viscosity of the curable composition at a rotation speed of 20/s at 25°C is, for example, from 500 to 30000 mPa·s. The lower limit of the viscosity is preferably 1000 mPa·s, and particularly preferably 2000 mPa·s, from the viewpoint of forming a coating film having a suitable thickness. The upper limit of the viscosity is preferably 10000 mPa·s, particularly preferably 6000 mPa·s, and most preferably 4000 mPa·s, from the viewpoint of forming a uniform coating film.

The curable composition can be produced by mixing the above-mentioned components. Note that the curable composition is preferably used as a two-part type curable composition and, for example, the polyol compound (A) and the polyisocyanate compound (C) are preferably stored separately and mixed at the time of use. Thus, it is possible to prevent the curable composition from curing during storage.

Because the curable composition has the composition described above, a cured product can be formed by a two-step curing reaction of thermosetting and photocuring. That is, the curable composition is a dual-cure composition.

When the curable composition is subjected to thermosetting treatment, a urethane bonding reaction proceeds, and a semi-cured product with active energy ray curability is obtained. The semi-cured product has a large elongation at break and can easily conform to height difference. The semi-cured product can suitably conform to a surface shape of a substrate even when the substrate has a curved surface (or nonplanar; including recess and protrusion shapes and spherical shapes). After the semi-cured product is allowed to conform to the surface shape of the substrate, the (meth)acryloyl group contained in the semi-cured product is polymerized by a photocuring treatment, and thus the semi-cured product is cured. The cured product having excellent adhesion to a substrate, hardness, scratch resistance, and chemical resistance can be formed.

When the curable composition is used in in-mold molding or three-dimensional surface decoration molding, it is preferable to form a film-like semi-cured product in advance by subjecting the curable composition to a thermosetting treatment and then subjecting the film-like semi-cured product to the molding. Since the film-like semi-cured product has excellent stretchability, the film-like semi-cured product can be allowed to conform to a shape of a recessed part of a mold and can be closely adhered to the mold.

The curable composition can be thus used as a dual-cure coating agent. Furthermore, the curable composition can be used as a raw material of a film coating agent. Note that the film coating agent is a coating agent formed in a film form or a sheet form. Furthermore, the curable composition can be also used as a coating agent (especially, a film coating agent) for in-mold molding or three-dimensional surface decoration molding.

Semi-cured product

The semi-cured product of the present disclosure contains a (meth)acryloyl group terminal-containing urethane prepolymer. The urethane prepolymer contains, as constituent monomers, a polyol compound (A) having an isocyanurate skeleton, an acrylic compound (B) containing a hydroxy group, and a polyisocyanate compound (C) having an isocyanurate skeleton.

The urethane prepolymer may contain another monomer as a constituent monomer besides those described above; however, the proportion of the total of the polyol compound (A), the acrylic compound (B), and the polyisocyanate compound (C) with respect to the total amount of constituent monomers is, for example, 60 wt.% or greater, preferably 70 wt.% or greater, more preferably 80 wt.% or greater, particularly preferably 90 wt.% or greater, most preferably 95 wt.% or greater, and especially preferably 99 wt.% or greater.

The semi-cured product may contain another constituent component besides the urethane prepolymer; however, the proportion of the urethane prepolymer with respect to the total amount of constituent components is, for example, 60 wt.% or greater, preferably 70 wt.% or greater, more preferably 80 wt.% or greater, particularly preferably 90 wt.% or greater, and most preferably 95 wt.% or greater. The semi-cured product may consist only of the urethane prepolymer.

The semi-cured product can be obtained by subjecting hydroxy groups contained in the polyol compound (A) and the acrylic compound (B) and isocyanate groups of the polyisocyanate compound (C) to urethane bonding.

The urethane bonding reaction, for example, proceeds by heat-treating the curable composition. The heat treatment conditions are, for example, at 100 to 150°C for approximately 0.5 to 12 hours. After completion of the heat treatment, the cured product may be further aged at room temperature (from 1 to 30°C) for approximately 12 to 60 hours.

The semi-cured product has excellent stretchability because the urethane prepolymer that is included in the semi-cured product contains the polyol compound (A) and the acrylic compound (B) as constituent monomers, and the elongation at break is, for example, 60% or greater, preferably 80% or greater, more preferably 100% or greater, even more preferably 120% or greater, and particularly preferably 125% or greater. Note that the elongation at break can be measured with instruments and conditions described in Examples below.

The semi-cured product can easily conform to height difference because the semi-cured product has stretchability, and can suitably conform to a shape of a curved surface of a substrate (e.g., plastic substrate such as PET) that is a covering target. Furthermore, when the semi-cured product is irradiated with an active energy ray, (meth)acryloyl groups are polymerized to form a cured product. Thus, the semi-cured product is suitable as a film coating agent.

Cured product

The cured product of the present disclosure is a cured product of the curable composition or the semi-cured product. The cured product includes a polymer obtained by subjecting hydroxy groups and isocyanate groups in the curable composition to urethane bonding and then subjecting (meth)acryloyl groups to polymerization.

The cured product is obtained by subjecting the curable composition to thermosetting and photocuring. More specifically, the cured product is obtained by subjecting the curable composition to heat treatment and active energy ray irradiation treatment. The heat treatment conditions are identical to the heat treatment conditions of the urethane bonding reaction.

The cured product is also obtained by subjecting the semi-cured product to photocuring. More specifically, the cured product is obtained by subjecting the semi-cured product to an active energy ray irradiation treatment.

Examples of the active energy ray include ultraviolet rays and electron beams. From the industrial viewpoints such as safety and reaction efficiency, ultraviolet rays are preferably used. Examples of the irradiation source of ultraviolet ray include high pressure mercury lamps and metal halide lamps. The quantity of the ultraviolet ray to be irradiated is, for example, from 100 to 10000 $mJ/cm^2$.

The cured product has excellent hardness, chemical resistance, scratch resistance, and scratch recovery.

The cured product has a high hardness and has a pencil hardness (by a method in accordance with JIS K 5600) of, for example, preferably H or higher, more preferably 2H or higher, particularly preferably 3H or higher, and most preferably 4H or higher.

The cured product has excellent chemical resistance. Even when a sunscreen product is deposited on the cured product, it does not make the surface swell or does not cause white cloudiness to occur. That is, the cured product has excellent sunscreen material resistance.

The cured product has excellent scratch resistance. Note that the scratch resistance can be measured with instruments and conditions described in Examples below.

When the cured product is subjected to a scratching test using steel wool under a load of 500 g for 10 reciprocations, the gloss retention measured 2 minutes after the scratching test is, for example, 80% or greater, preferably 85% or greater, particularly preferably 90% or greater, and most preferably 95% or greater.

Furthermore, when the cured product is subjected to a scratching test using steel wool under a load of 500 g for 20 reciprocations, the gloss retention measured 2 minutes after the scratching test is, for example, 80% or greater, preferably 85% or greater, particularly preferably 90% or greater, and most preferably 95% or greater.

The gloss retention 2 minutes after the scratching test is determined by the following equation.

$$\text{Gloss retention 2 minutes after scratching test (\%)} = (G1)/(G0) \times 100$$

G0 indicates gloss of the cured product before the scratching test, that is, initial gloss [Gs (60°)] of the cured product.

G1 indicates gloss [Gs (60°)] of the cured product 2 minutes after the scratching test.

Furthermore, when the cured product is subjected to a scratching test using steel wool under a load of 500 g for 10 reciprocations, the gloss retention measured after the cured product is allowed to stand still for 24 hours after the scratching test is, for example, preferably 80% or greater, more preferably 85% or greater, particularly preferably 90% or greater, and most preferably 95% or greater.

Furthermore, when the cured product is subjected to a scratching test using steel wool under a load of 500 g for 20 reciprocations, the gloss retention measured after the cured product is allowed to stand still for 24 hours after the scratching test is, for example, preferably 80% or greater, more preferably 85% or greater, particularly preferably 90% or greater, and most preferably 95% or greater.

The gloss retention after the cured product is allowed to stand still for 24 hours after scratching test is determined by the following equation.

Gloss retention after cured product is allowed to stand still for 24 hours after scratching test (%) = (G2)/(G0) × 100

G0 indicates gloss of the cured product before the scratching test, that is, initial gloss [Gs (60°)] of the cured product.

G2 indicates the gloss [Gs (60°)] of the cured product after the cured product is allowed to stand still when the cured product after the scratching test is allowed to stand still in a constant temperature and humidity condition at 23°C and 50%RH for 24 hours.

The cured product has the above properties in combination. Thus, when a substrate is covered with a coating film made of the cured product, hardness, chemical resistance, scratch resistance, and scratch recovery can be imparted to the substrate. In addition, the substrate can be decorated. That is, when the substrate is covered with the cured product, good appearance and a new function can be imparted to the substrate. Note that examples of the substrate include an enclosure of a home appliance (refrigerator, washing machine, air conditioner, television, or the like), an enclosure of an electronic device (personal computer, mobile phone, smartphone, or the like), a member configuring a musical instrument (piano, electric organ, an electronic musical instrument, or the like), a vehicle member (an interior material such as an instrument panel, a door panel, a head lining, or a tonneau cover, or an exterior material such as a bumper) for an automobile, a railway vehicle, and the like.

Active energy ray curable film

The active energy ray curable film of the present disclosure contains a (meth)acryloyl group terminal-containing urethane prepolymer containing: a polyol compound (A) having an isocyanurate skeleton; an acrylic compound (B) containing a hydroxy group; and a polyisocyanate compound (C) having an isocyanurate skeleton; as constituent monomers.

The film can be produced by, for example, heat-treating a coating film made of the curable composition. The heat treatment conditions are identical to the heat treatment conditions of the urethane bonding reaction.

The method of forming a coating film of the curable composition is not particularly limited, and for example, the coating film can be formed by applying the curable composition on a surface of a release film or substrate by a screen printing method, a mask printing method, an offset printing method, an inkjet printing method, a flexographic printing method, a gravure printing method, stamping, dispensing, a squeegee printing method, a silk screen printing method, spraying, or brushing.

The thickness of the film is not particularly limited but is, for example, from 20 to 150 μm.

The film has stretchability characteristic of the urethane prepolymer. That is, the film has a large elongation at break and excellent conformity to height difference. Thus, the film can suitably conform to a shape of a curved surface of a substrate. Furthermore, when the film is irradiated with an active energy ray, (meth)acryloyl groups are copolymerized, and thus a cured product having excellent hardness, scratch resistance, and chemical resistance is formed.

Because the film has the properties described above, for example, the film is suitable as a film coating agent and, especially, is suitable as a film coating agent for an in-mold molding or three-dimensional surface decoration molding.

Plastic molded product and production method thereof

In the plastic molded product of the present disclosure, at least a part of a substrate surface, which is a covering target, is covered with a thin film made of a cured product of the curable composition (or a cured product of the active energy ray curable film). That is, the plastic molded product has a coating film made of the cured product on at least a part of a substrate surface.

Examples of the plastic molded product include an enclosure of a mobile phone, laptop computer, or digital camera, a home appliance, a cosmetic container, and an interior and exterior component for an automobile.

The thickness of the coating film made of the cured product is not particularly limited and is, for example, from 20 to 150 μm.

The substrate at least includes plastic as a constituting material. The constituting material may contain another raw material, such as wood, metal, glass, cloth, leather, and silicone, besides the plastic.

The plastic includes a thermoplastic resin and a thermosetting resin. One of these can be used alone or two or more in combination.

Examples of the thermoplastic resin include polyolefin-based resins, such as polyethylenes and polypropylenes; styrene-based resins, such as polystyrenes; polyesters, such as poly(ethylene terephthalate)s (PETs); vinyl chloride-based resins, such as vinyl chloride resins; polyamides, such as polyamide 46, polyamide 6, polyamide 66, polyamide 610, polyamide 612, polyamide 1010, polyamide 1012, polyamide 11, polyamide 12, and polyamide 1212; poly(phenylene ether)s, such as poly(2,6-dimethyl-1,4-phenylene ether); homopolymers or copolymers of acrylonitrile, such as PAN

resins, AS resins, ABS resins, AAS resins, ACS resins, AES resins, and AXS resins; and (meth)acrylic resins, polycarbonates, polyacetals, poly(phenylene sulfide)s, poly(ether ether ketone)s, poly(amide-imide)s, polyimides, poly(ether imide)s, polysulfones, poly(ether sulfone)s, and modified products and derivatives of these resins, as well as polymer blends and polymer alloys containing these resins.

Examples of the thermosetting resin include phenol resins, urea resins, melamine resins, unsaturated polyesters, furan resins, epoxy resins, polyurethane resins, allyl resins, and polyimides.

The substrate is preferably a solidified product of the thermoplastic resin and/or a molded product containing a cured product of the thermosetting resin (preferably a three-dimensional molded product). The surface of the substrate is not particularly limited in its shape and may be a planar surface or a curved surface (including recess and protrusion shapes and spherical shapes). Furthermore, the substrate may include a combination of a planar part and a curved part.

The plastic molded product can be produced by, for example, applying the curable composition on a molded substrate surface and subjecting it to thermosetting and photocuring.

Furthermore, because the active energy ray curable film has excellent stretchability, when the active energy ray curable film is used, a plastic molded product including a coating film having excellent adhesion can be produced by an in-mold molding method or a three-dimensional surface decoration molding method.

The method for producing a plastic molded product by using the active energy ray curable film includes, for example, the following steps.

Step 1: bringing the active energy ray curable film described above into close adhesion with a recessed part of a mold, and then charging the recessed part of the mold with a molten plastic;
Step 2: solidifying or curing the plastic charged in the recessed part of the mold; and
Step 3: taking out a content from the mold, and curing the film by irradiation of an active energy ray.

Step 1

The step 1 is a step of bringing the active energy ray curable film described above into close adhesion with a recessed part of a mold, and then charging the recessed part of a mold with a molten plastic.

Examples of the method of closely adhering the active energy ray curable film to a recessed part of a mold include: a method including, with a use of a mold provided with a vacuum port, arranging the film on a top part of the mold, and then evacuating the air in a space between the film and the mold by suction through the vacuum port to make the film contact closely to the mold; and a method including arranging the film on a top part of a mold and making the film contact closely to the mold by compressed air from the upper part of the film; and these methods can be used without particular limitation.

After the film is closely adhered to the recessed part of the mold, molten plastic is injected into the space of the recessed part of the mold.

Step 2

The step 2 is a step of solidifying or curing the plastic charged in the recessed part of the mold. The method of solidifying or curing can be appropriately selected based on the type of the plastic. For example, in a case where the plastic is a thermoplastic resin, solidification can be performed by cooling the molten plastic to a temperature that is not higher than the melting point. Furthermore, in a case where the plastic is a thermosetting resin, curing can be performed by heat-treating a molten plastic.

After the step 2, a solidified or cured plastic (i.e., substrate) having the active energy ray curable film on a surface can be obtained.

Step 3

The step 3 is a step of taking out a content (i.e., substrate having the active energy ray curable film on a surface) from the mold, and curing the film by irradiating the content that has been taken out with an active energy ray.

The irradiation conditions of the active energy ray are identical to the active energy ray irradiation conditions at the time of producing the cured product described above.

Examples

Hereinafter, the present disclosure will be described more specifically with reference to examples, but the present disclosure is not limited by these examples.

Synthesis Example 1

To a five-neck flask equipped with a reflux condenser, a thermometer, an air gas introduction tube, and a stirring device, 1306 g of tris(2-hydroxyethyl)isocyanurate, 1694 g of ε-caprolactone, and 6 mg of tin (II) octanoate were added in a nitrogen gas atmosphere, and then the internal temperature was increased to 170°C.

The concentration of the residual ε-caprolactone was determined to be less than 1.0% by gas chromatographic analysis, and then the mixture was cooled and taken out of the five-neck flask. The resulting compound had a number average molecular weight (Mn) of 611, a molecular weight dispersity (Mw/Mn) of 1.2, a viscosity of 14.3 [Pa·s/25°C], and a hydroxyl value of 280.1.

For the measurement of the molecular weight of the resulting compound, the number average molecular weight (Mn) and weight average molecular weight (Mw) were determined by comparison with polystyrene standards using a high-speed GPC apparatus, and the molecular weight dispersity (Mw/Mn) was calculated.

The measurement conditions were as follows.

- Measurement instrument: a high-speed GPC instrument "HLC-8220 GPC", available from Tosoh Corporation
- Mobile phase: tetrahydrofuran

Example 1

In a 50-mL glass container, a polyol compound (A), an acrylic compound (B), a polyisocyanate compound (C), a photopolymerization initiator (D), and a surface modifier (E) were charged as listed in Table 1, mixed, and defoamed by using a planetary mixer (Planetary Centrifugal Vacuum Mixer THINKY MIXER, model: ARV-310, available from Thinky Corporation), and thus a composition was obtained.

The resulting composition was casted into a glass plate frame sandwiching a spacer made of Teflon (registered trademark) having a thickness of 2 mm, subjected to thermosetting by an oven at 120°C for 3 hours, then dried, and further cured under constant temperature and humidity conditions of 23°C and 50% RH for 48 hours, and thus a semi-cured product was obtained.

Furthermore, the resulting composition was applied to a poly(ethylene terephthalate) film (Cosmoshine A4100 #100, available from Toyobo Co., Ltd.) to give a coating thickness of 30 μm by using an applicator. Then, thermosetting was performed in an oven at 120°C for 3 hours, then drying was performed, and curing was further performed under constant temperature and humidity conditions of 23°C and 50% RH for 48 hour, and thus a laminate of a PET film and a semi-cured product containing an acryloyl group terminal-containing urethane prepolymer containing the polyol compound (A), the acrylic compound (B), and the polyisocyanate compound (C) as constituent monomers (semi-cured product/PET film laminate) was obtained.

Thereafter, on the semi-cured product side of the semi-cured product/PET film laminate, UV irradiation was performed twice at an irradiation dose of 400 mJ/cm$^2$ by using an inverter type conveyor system for 4 kW $\times$ 1 lamp (ECS-401GX, available from Eye Graphics Co., Ltd.) to allow the photocuring reaction to proceed, and thus a laminate of the cured product and the PET film (cured product/PET film laminate; hereinafter, also simply referred to as laminate) was obtained.

Examples 2 to 5 and Comparative Example 1

Compositions, semi-cured products, and laminates were obtained in the same manner as in Example 1 except that the formulations of the compositions were changed as listed in Table 1.

The following evaluations were performed for the compositions, the semi-cured products, and the laminates obtained in the Examples and Comparative Example.

Viscosity

The viscosity (mPa·s) at a rotation speed of 20/s at 25°C of each of the compositions obtained in the Examples and Comparative Example was measured using a rheometer (trade name "Physica UDS 200", available from Paar Physica). Note that, for the Comparative Example, viscosity measurements were performed for the composition before addition of a solvent and for the composition after addition of the solvent.

Usability

The usability of each of the compositions obtained in the Examples and Comparative Example was evaluated by the following method.

Evaluation criteria

Good: amount of the solvent contained in the composition was less than 1 wt.% with respect to the total weight of non-volatile components (100 wt.%), and the viscosity of the composition was 4000 mPa·s or less.
Marginal: amount of the solvent contained in the composition was less than 1 wt.% with respect to the total weight of non-volatile components (100 wt.%), and the viscosity of the composition was greater than 4000 mPa·s and less than 30000.
Poor: amount of the solvent contained in the composition was 1 wt.% or greater with respect to the total weight of non-volatile components (100 wt.%), or the viscosity of the composition was greater than 30000 mPa·s.

Stretchability

A material obtained by punching out the semi-cured product obtained in each of Examples and Comparative Example into JIS No. 3 dumbbell shape was used as a sample, and tensile test was performed under the following conditions by using the TENSILON universal testing machine (RTC-1350A (available from A&D Company, Limited)), and elongation at break (%) was calculated by the following equation. A higher elongation at break indicates superior stretchability.

Elongation at break (%) = [(length of sample at break (L) - length of sample before test (L0))/length of sample before test (L0)] × 100

<Tensile Test Conditions>

Test atmosphere: 23°C, 50% RH
Tensile speed: 500 mm/min
The number of test was 5 times. An average value was determined by excluding the maximum value and the minimum value, and the average value was used as a length (L) at break of a sample.

Adherence

When the elongation at break of the semi-cured product obtained by the thermosetting is large, the semi-cured product can conform to the surface shape of the substrate. Furthermore, in a case where the semi-cured product is subjected to photocuring after the semi-cured product is allowed to conform to a shape of the substrate surface, when the elongation at break of the resulting cured product is 70% or less, a cured product having excellent adhesion can be obtained by exhibiting excellent adhesion to a substrate. Thus, the adhesion was evaluated based on the following criteria.

Adhesion determination criteria

Excellent: elongation at break after the thermosetting was 100% or greater, and elongation at break after the thermosetting and photocuring was 80% or less
Good: elongation at break after the thermosetting was 80% or greater and less than 100%, and elongation at break after the thermosetting and photocuring was 80% or less
Poor: elongation at break after the thermosetting was less than 80%, or elongation at break after the thermosetting and photocuring was greater than 80%

Pencil hardness

The pencil hardness of the surface on the cured coating side of the laminates obtained in the examples and comparative examples was evaluated by the method in accordance with JIS K5600.
That is, when the surface on the cured product side of the laminate was rubbed using a pencil (pencil lead), and if there was an observable scratch on the surface of the laminate, the laminate was rated "poor". Specifically, the evaluation was performed using a pencil with a predetermined hardness, and when no scratch was made, another evaluation was performed with a pencil with a hardness one grade higher, and this operation was repeated. Once a scratch was observed, the laminate was re-evaluated with a hardness one grade lower, and when no scratch was observed, the laminate was

evaluated again using a pencil with a hardness one grade higher. When reproducibility was confirmed twice or more, the hardness of the hardest pencil with which no scratch was made was determined as the pencil hardness of the cured coating.

- Pencil for evaluation: a "Pencil for Pencil Hardness Test" available from Mitsubishi Pencil Co., Ltd.
- Load: 750 gf
- Scratch distance: 7 mm or longer
- Scratch angle: 45°
- Measurement environment: 23°C, 50% RH

Scratch resistance and scratch recovery

For the scratch resistance of the cured coating side surface of the laminates obtained in the examples and comparative examples, a scratch test was performed by attaching a steel wool (B-204, Bonstar for commercial use #0000) to a rubbing tester (Standard Model, available from Nippon Rika Industries Corporation) and reciprocating the steel wool (10 reciprocations or 20 reciprocations) on the coating with a load of 500 g applied. Using a gloss meter (Gloss Meter VG7000, available from Nippon Denshoku Industries Co., Ltd.), the gloss of the cured coating side surface of the laminate was measured for the initial gloss (G0) [Gs (60°C)] before the scratch test on the cured coating side surface and the gloss (G1) [Gs (60°C)] 2 minutes after the scratch test. The gloss retention was calculated by the following equation to evaluate the scratch resistance.

$$\text{Gloss retention 2 minutes after scratching test (\%)} = (G1)/(G0) \times 100$$

In addition, the laminate after scratching was allowed to stand still under constant temperature and humidity conditions of 23°C and 50% RH for 24 hours, and then the gloss (G2) [Gs (60°C)] of the coating film after standing was measured. The gloss retention with respect to the initial gloss (G0) [Gs (60°C)] was calculated by the following equation to evaluate the scratch recovery. The scratch recovery was evaluated for each of cases after 10 reciprocations and after 20 reciprocations.

$$\text{Gloss retention after cured product was allowed to stand still for 24 hours after scratching test (\%)} = (G2)/(G0) \times 100$$

Evaluation criteria

Excellent: the gloss retention was 90% or higher
Good: the gloss retention was less than 90% and 80% or higher
Poor: the gloss retention was less than 80%, or the coating film peeled off and the gloss was not measurable

Sunscreen Resistance (Immersion method)

The entire surface on the cured coating side of a test specimen (rectangular in shape with an area of 2 $cm^2$) of the laminate obtained in each of the Examples and Comparative Example was brought into contact with 0.4 g of a sunscreen cream ("Ultra Sheer Dry-Touch SPF45" available from Neutrogena Corporation) weighed on a slide glass (contact amount with respect to area of the cured coating and the sunscreen cream: 0.1 $g/cm^2$).
The entire cured coating was covered with a polyvinylidene chloride film, and this was allowed to stand still in an oven at 80°C for 5 hours, then the sunscreen cream was wiped off, and the state of adhesion of the cured coating was evaluated based on the criteria below. The following indicates that a cured coating harder to peel off had better adhesion to a substrate and chemical resistance.

Evaluation criteria

Good: the cured coating did not peel off
Poor: a part of the cured coating peeled off, or the cured coating completely peeled off

Sunscreen resistance (drip method)

To the cured coating side surface of the laminates obtained in each of the Examples and Comparative Example was applied 0.025 g/cm$^2$ of a sunscreen cream ("Ultra Sheer Dry-Touch SPF45" available from Neutrogena Corporation), and the laminate was allowed to stand still in an oven at 50°C for 1 hour. The sunscreen cream was then wiped off, and the appearance of the cured coating was evaluated based on the following criteria.

Evaluation criteria

Excellent: the cured coating had almost no change in the appearance
Good: a trace of a chemical liquid remained on the cured coating
Poor: the cured coating swelled, or the cured coating swelled and whitened

The above-described results are summarized in Table 1 given below.

[Table 1]

Table 1

| | | | Example 1 | Example 2 | Example 3 | Example 4 | Example 5 | Comparative Example 1 |
|---|---|---|---|---|---|---|---|---|
| Curable composition | Polyol compound (A) | wt.% | 32.4 | 38.4 | 41.0 | 43.6 | 45.3 | 43.7 |
| | Acrylic compound (B) | | 18.8 | 11.1 | 7.8 | 4.6 | 2.3 | - |
| | Polyisocyanate compound (C) | | 45.5 | 47.2 | 47.9 | 48.6 | 49.1 | 46.0 |
| | Photopolymerization initiator (D) | | 3.0 | 3.0 | 3.0 | 3.0 | 3.0 | - |
| | Surface modifier (E) | | 0.3 | 0.3 | 0.3 | 0.3 | 0.3 | 0.3 |
| | Solvent | | - | - | - | - | - | 10.0 |
| | NCO/OH | | 1.05 | 1.05 | 1.05 | 1.05 | 1.05 | 1.05 |
| | OH groups of (A)/OH groups of (B) (molar ratio) | | 3 | 6 | 9 | 17 | 33 | - |
| Viscosity (mPa·s) | | | 1765 | 2069 | 2560 | 3623 | 4042 | Before solvent addition: 68200 After solvent addition: 1703 |
| Usability | | | Good | Good | Good | Good | Marginal | Poor |
| Stretchability: elongation at break [%] | | After thermosetting | 82 | 131 | 122 | 114 | 84 | 51 |
| | | After thermosetting + photocuring | 50 | 64 | 71 | 75 | 80 | - |
| Adhesion | | | Good | Excellent | Excellent | Excellent | Good | Poor |
| Cured product after thermosetting | Pencil hardness | | 2H | 2H | 3H | 3H | 3H | 3H |
| | Steel wool scratch resistance | 2 minutes later | Excellent | Excellent | Excellent | Excellent | Excellent | Excellent |
| | | 24 hours later | Excellent | Excellent | Excellent | Excellent | Excellent | Excellent |
| + photocuring | Load 500 g × 10 reciprocations | | | | | | | |
| | Steel wool scratch resistance Load 500 g × 20 reciprocations | 2 minutes later | Good | Excellent | Excellent | Excellent | Excellent | Excellent |
| | | 24 hours later | Good | Excellent | Excellent | Excellent | Excellent | Excellent |

(continued)

| | | | Example 1 | Example 2 | Example 3 | Example 4 | Example 5 | Comparative Example 1 |
|---|---|---|---|---|---|---|---|---|
| | Sunscreen resistance | (Immersion method) adhesion | Good | Good | Good | Good | Good | Good |
| | | (Drip method) appearance | Good | Good | Excellent | Excellent | Excellent | Excellent |

Polyol compound (A): a compound obtained by Synthesis Example 1

Acrylic compound (B): trade name "PLACCEL FA2D" (acrylate derivative; Mn: 344; Mw/Mn: 1.4; hydroxyl value: 159 to 164; viscosity at 25°C: 80 mPa·s), available from Daicel Corporation
Polyisocyanate (C): trade name "Takenate D-170N" (an isocyanurate-modified product of hexamethylene diisocyanate), available from Mitsui Chemicals, Inc.
Photopolymerization initiator (D): trade name "Irgacure 1173" (2-hydroxy-2-methyl-1-phenylpropanone), available from IGM Resins B.V.
Surface modifier (E): "BYK-306" (an ether-modified polydimethylsiloxane), available from BYK-Chemie Japan K.K.
Solvent: diethylene glycol monoethyl ether acetate, available from Tokyo Chemical Industry Co., Ltd.

The curable composition obtained in each of the Examples contained both the polyol compound (A) and the acrylic compound (B). Thus, it was found that the curable composition had dual curability, that a semi-cured product was obtained after thermosetting, and that the semi-cured product had excellent stretchability and suitable conformity to height difference. Furthermore, it was found that, when the semi-cured product was subjected to photocuring treatment, a cured product having a high hardness and excellent scratch resistance, scratch recovery, and chemical resistance was obtained. Furthermore, the curable composition obtained in each of the Examples had a low viscosity and excellent applicability without addition of any solvent.

On the other hand, it was observed that the curable composition obtained in Comparative Example 1 did not contain the acrylic compound (B) and thus had no dual curability and completely cured by thermosetting, and that the obtained cured product had a low stretchability and did not conform to height difference although the cured product had a high hardness and excellent scratch resistance, scratch recovery, and chemical resistance. Furthermore, because the curable composition obtained in Comparative Example 1 did not contain the acrylic compound (B), it was difficult to apply such a composition without addition of the solvent, due to excessively high viscosity. That is, it was difficult to form a solventless curable composition for the curable composition containing no acrylic compound (B).

From the above, it was observed that the curable composition of the present disclosure had dual curability as a new property while the properties of the obtained cured product (hardness, scratch resistance, scratch recovery, and chemical resistance) were maintained, can form a semi-cured product in a high yield without strictly adjusting the curing conditions, and that the semi-cured product thus obtained had excellent stretchability. Furthermore, the curable composition can be solventless without impairing applicability and had small environmental burden and excellent safety.

Industrial Applicability

The composition of the present disclosure has dual curability. When the composition is heat-treated, a semi-cured product is obtained. The semi-cured product has excellent conformity to recess and protrusion shapes of a substrate. Furthermore, when the semi-cured product is subjected to light irradiation treatment, a cured product is obtained. The cured product has excellent hardness, scratch resistance, and chemical resistance. Since the composition has the properties described above, the composition is suitable as a film coating agent.

## Claims

1. A curable composition comprising: a polyol compound (A) having an isocyanurate skeleton; an acrylic compound (B) containing a hydroxy group; and a polyisocyanate compound (C) having an isocyanurate skeleton and an isocyanate group besides the isocyanurate skeleton; and further comprising from 1 to 5 parts by weight of a photopolymerization initiator (D) with respect to 100 parts by weight total of the polyol compound (A), the acrylic compound (B), and the polyisocyanate compound (C).

2. The curable composition according to claim 1, wherein the polyol compound (A) is a compound (a) represented by Formula (1):

[Chem. 1]

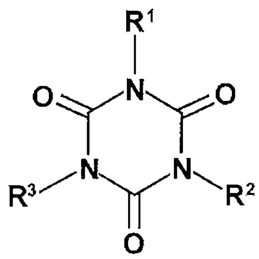

(1)

where $R^1$ to $R^3$ are identical or different and are each a group represented by Formula (1a):

[Chem. 2]

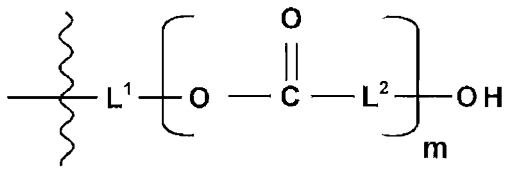

(1a)

where $L^1$ and $L^2$ are identical or different and each represent an alkylene group having from 1 to 10 carbons, and m represents a number of 0 or greater, where m in $R^1$ to $R^3$ are not simultaneously 0, and a bond with a wavy line bonds to a nitrogen atom in the formula.

**3.** The curable composition according to claim 1 or 2, wherein the acrylic compound (B) is a compound (b") represented by Formula (2"):

[Chem. 3]

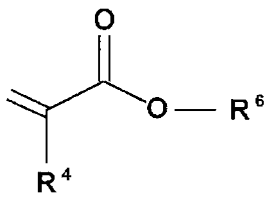

(2")

where $R^4$ is H or $CH_3$, and $R^6$ is a group represented by Formula (2b):

[Chem. 4]

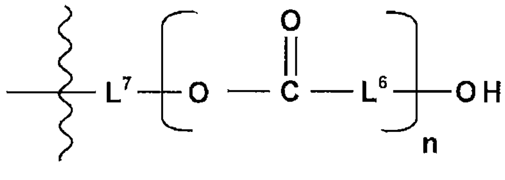

(2b)

where $L^6$ and $L^7$ are identical or different and each represent an alkylene group having from 1 to 10 carbons, and n represents a number of 0 or greater, and a bond with a wavy line bonds to an oxygen atom in Formula (2").

**4.** The curable composition according to any one of claims 1 to 3, wherein the polyisocyanate compound (C) is a

compound (c) represented by Formula (3):

[Chem. 5]

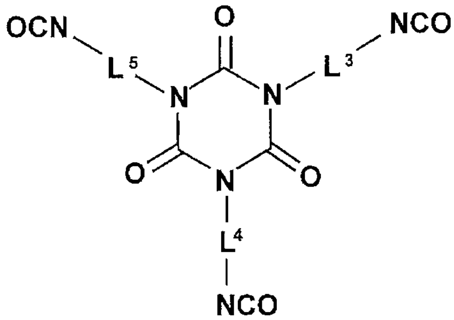

(3)

where $L^3$ to $L^5$ are identical or different and each represent an alkylene group having from 1 to 10 carbons.

5. The curable composition according to any one of claims 1 to 4, wherein the acrylic compound (B) is contained in a range from 1 to 70 parts by weight with respect to 100 parts by weight of the polyol compound (A).

6. The curable composition according to any one of claims 1 to 5, wherein the polyol compound (A) and the acrylic compound (B) are contained in a ratio that makes a molar ratio of hydroxy groups of the polyol compound (A) to hydroxy groups of the acrylic compound (B) (former/latter) to be from 1.5 to 50.

7. The curable composition according to any one of claims 1 to 6, wherein an equivalent ratio (NCO/OH) of NCO groups of the polyisocyanate compound (C) to OH groups in the polyol compound (A) and the acrylic compound (B) is in a range from 0.2 to 2.0.

8. The curable composition according to any one of claims 1 to 7, further comprising from 0.1 to 0.5 parts by weight of a polysiloxane derivative (E) with respect to 100 parts by weight total of the polyol compound (A), the acrylic compound (B), and the polyisocyanate compound (C).

9. The curable composition according to any one of claims 1 to 8, wherein the curable composition is a dual-cure coating agent.

10. An active energy ray curable film comprising a (meth)acryloyl group terminal-containing urethane prepolymer, the (meth)acryloyl group terminal-containing urethane prepolymer containing, as constituent monomers: a polyol compound (A) having an isocyanurate skeleton; an acrylic compound (B) containing a hydroxy group; and a polyisocyanate compound (C) having an isocyanurate skeleton; and the curable film further comprising from 1 to 5 parts by weight of a photopolymerization initiator (D) with respect to 100 parts by weight total of the polyol compound (A), the acrylic compound (B), and the polyisocyanate compound (C).

11. A cured product of the curable composition described in any one of claims 1 to 9.

12. A cured product of the active energy ray curable film described in claim 10.

13. A plastic molded product, having at least a portion of a substrate surface that is a covering target being covered with a coating film containing the cured product described in claim 11 or 12.

14. A method for producing an active energy ray curable film,

the active energy ray curable film including a (meth)acryloyl group terminal-containing urethane prepolymer, the (meth)acryloyl group terminal-containing urethane prepolymer containing, as constituent monomers: a polyol compound (A) having an isocyanurate skeleton; an acrylic compound (B) containing a hydroxy group; and a polyisocyanate compound (C) having an isocyanurate skeleton,

the method comprising heat-treating a coating film containing the curable composition described in any one of

claims 1 to 9.

**15.** A method for producing a plastic molded product, the method comprising following steps:

step 1: bringing the active energy ray curable film described in claim 10 into close adhesion with a recessed part of a mold, and then charging the recessed part of the mold with a molten plastic;
step 2: solidifying or curing the plastic charged in the recessed part of the mold; and step 3: taking out a content from the mold, and curing the film by irradiation of an active energy ray.

## Patentansprüche

**1.** Härtbare Zusammensetzung, umfassend: eine Polyolverbindung (A), die ein Isocyanurat-Gerüst aufweist; eine Acrylverbindung (B), die eine Hydroxygruppe enthält; und eine Polyisocyanatverbindung (C), die ein Isocyanurat-Gerüst und eine Isocyanatgruppe zusätzlich zu dem Isocyanurat-Gerüst aufweist; und ferner umfassend 1 bis 5 Gewichtsteile eines Photopolymerisationsinitiators (D) bezogen auf insgesamt 100 Gewichtsteile der Polyolverbindung (A), der Acrylverbindung (B) und der Polyisocyanatverbindung (C).

**2.** Härtbare Zusammensetzung gemäß Anspruch 1, wobei die Polyolverbindung (A) eine Verbindung (a), dargestellt durch Formel (1), ist:

[Chem. 1]

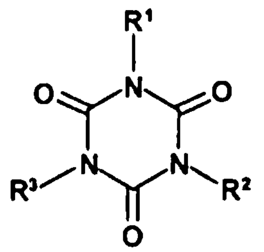

(1)

,

wobei $R^1$ bis $R^3$ identisch oder verschieden sind und jeweils eine Gruppe, dargestellt durch Formel (1a), sind:

[Chem. 2]

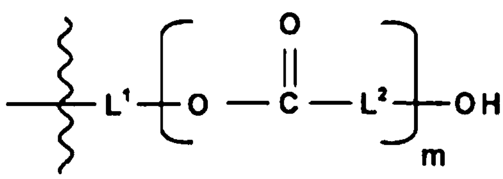

(1a)

,

wobei $L^1$ und $L^2$ identisch oder verschieden sind und jeweils eine Alkylengruppe mit 1 bis 10 Kohlenstoffen sind, und m eine Zahl von 0 oder größer ist, wobei die m in $R^1$ bis $R^3$ nicht gleichzeitig 0 sind und eine Bindung mit einer Wellenlinie an ein Stickstoffatom in der Formel bindet.

**3.** Härtbare Zusammensetzung gemäß Anspruch 1 oder 2, wobei die Acrylverbindung (B) eine Verbindung (b"), dargestellt durch Formel (2"), ist:

[Chem. 3]

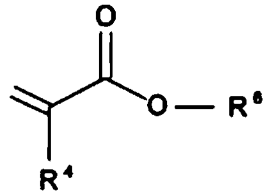

(2")

,

wobei $R^4$ H oder $CH_3$ ist und $R^6$ eine Gruppe, dargestellt durch Formel (2b), ist:

[Chem. 4]

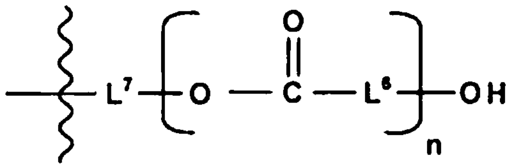

(2b)

wobei $L^6$ und $L^7$ identisch oder verschieden sind und jeweils eine Alkylengruppe mit 1 bis 10 Kohlenstoffen sind, und n eine Zahl von 0 oder größer ist, und eine Bindung mit einer Wellenlinie an ein Sauerstoffatom in Formel (2") bindet.

4. Härtbare Zusammensetzung gemäß einem der Ansprüche 1 bis 3, wobei die Polyisocyanatverbindung (C) eine Verbindung (c), dargestellt durch Formel (3), ist:

[Chem. 5]

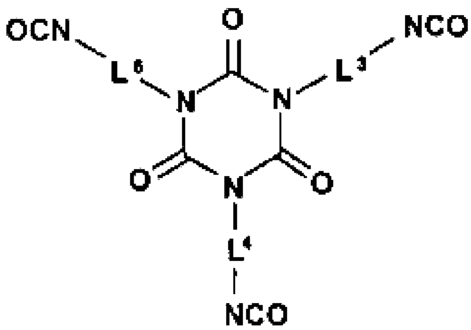

(3)

,

wobei $L^3$ bis $L^5$ identisch oder verschieden sind und jeweils eine Alkylengruppe mit 1 bis 10 Kohlenstoffen sind.

5. Härtbare Zusammensetzung gemäß einem der Ansprüche 1 bis 4, wobei die Acrylverbindung (B) in einem Verhältnis von 1 bis 70 Gewichtsteilen bezogen auf 100 Gewichtsteile der Polyolverbindung (A) enthalten ist.

6. Härtbare Zusammensetzung gemäß einem der Ansprüche 1 bis 5, wobei die Polyolverbindung (A) und die Acrylverbindung (B) in einem Verhältnis enthalten sind, das ein molares Verhältnis vonHydroxygruppen der Polyolverbindung (A) zu Hydroxygruppen der Acrylverbindung (B) (erstere/letztere) von 1,5 bis 50 ergibt.

7. Härtbare Zusammensetzung gemäß einem der Ansprüche 1 bis 6, wobei ein Äquivalenzverhältnis (NCO/OH) von NCO-Gruppen der Polyisocyanatverbindung (C) zu OH-Gruppen in der Polyolverbindung (A) und der Acrylverbindung (B) im Bereich von 0,2 bis 2,0 liegt.

**8.** Härtbare Zusammensetzung gemäß einem der Ansprüche 1 bis 7, ferner umfassend 0,1 bis 0,5 Gewichtsteile eines Polysiloxanderivats (E) bezogen auf insgesamt 100 Gewichtsteile der Polyolverbindung (A), der Acrylverbindung (B) und der Polyisocyanatverbindung (C).

**9.** Härtbare Zusammensetzung gemäß einem der Ansprüche 1 bis 8, wobei es sich bei der härtbaren Zusammensetzung um ein dualhärtendes Beschichtungsmittel handelt.

**10.** Durch aktive Energiestrahlung härtbarer Film, umfassend ein Urethan-Präpolymer mit endständigen (Meth)acryloylgruppen, wobei das endständige (Meth)acryloylgruppen enthaltende Urethan-Präpolymer als Grundmonomere enthält: eine Polyolverbindung (A), die ein Isocyanurat-Gerüst aufweist; eine Acrylverbindung (B), die eine Hydroxygruppe enthält; und eine Polyisocyanatverbindung (C), die ein Isocyanurat-Gerüst aufweist; und der härtbare Film ferner 1 bis 5 Gewichtsteile eines Photopolymerisationsinitiators (D) bezogen auf insgesamt 100 Gewichtsteile der Polyolverbindung (A), der Acrylverbindung (B) und der Polyisocyanatverbindung (C) umfasst.

**11.** Gehärtetes Produkt der in einem der Ansprüche 1 bis 9 beschriebenen härtbaren Zusammensetzung.

**12.** Gehärtetes Produkt des in Anspruch 10 beschriebenen, durch aktive Energiestrahlung härtbaren Films.

**13.** Kunststoffformteil, von dessen Substratoberfläche, die ein Ziel zum Abdecken ist, mindestens ein Teil mit einem Beschichtungsfilm, der das in Anspruch 11 oder 12 beschriebene gehärtete Produkt enthält, abgedeckt ist.

**14.** Verfahren zum Herstellen eines durch aktive Energiestrahlung härtbaren Films,

wobei der durch aktive Energiestrahlung härtbare Film ein endständige (Meth)acryloylgruppen enthaltendes Urethan-Präpolymer enthält, wobei das endständige (Meth)acryloylgruppen enthaltende Urethan-Präpolymer als Grundmonomere enthält: eine Polyolverbindung (A), die ein Isocyanurat-Gerüst aufweist; eine Acrylverbindung (B), die eine Hydroxygruppe enthält; und eine Polyisocyanatverbindung (C), die ein Isocyanurat-Gerüst aufweist,
wobei das Verfahren umfasst, einen Beschichtungsfilm, der die in einem der Ansprüche 1 bis 9 beschriebene härtbare Zusammensetzung enthält, mit Wärme zu behandeln.

**15.** Verfahren zum Herstellen eines Kunststoffformteils, wobei das Verfahren die folgenden Schritte umfasst:

Schritt 1: den in Anspruch 10 beschriebenen, durch aktive Energiestrahlung härtbaren Film mit einem vertieften Teil einer Form in enge Haftung zu bringen und den vertieften Teil der Form dann mit einem geschmolzenen Kunststoff zu befüllen;
Schritt 2: den in den vertieften Teil der Form eingefüllten Kunststoff zu verfestigen oder zu härten; und
Schritt 3: einen Inhalt aus der Form zu entnehmen und den Film durch Bestrahlung mit einem aktiven Energiestrahl zu härten.

## Revendications

**1.** Composition durcissable comprenant : un composé polyol (A) ayant un squelette isocyanurate ; un composé acrylique (B) contenant un groupe hydroxy ; et un composé polyisocyanate (C) ayant un squelette isocyanurate et un groupe isocyanate en plus du squelette isocyanurate ; et comprenant en outre 1 à 5 parties en poids d'un initiateur de photopolymérisation (D) par rapport à 100 parties en poids au total du composé polyol (A), du composé acrylique (B) et du composé polyisocyanate (C).

**2.** Composition durcissable selon la revendication 1, dans laquelle le composé polyol (A) est un composé (a) représenté par la Formule (1) :

[Chem. 1]

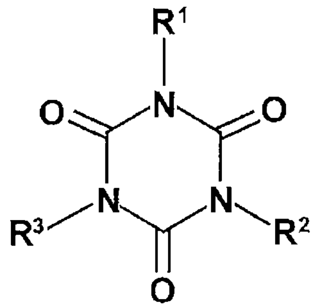

(1)

où $R^1$ à $R^3$ sont identiques ou différents et sont chacun un groupe représenté par la Formule (1a) :

[Chem. 2]

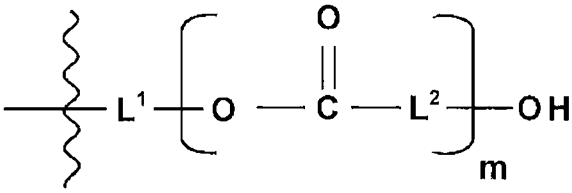

(1a)

où $L^1$ et $L^2$ sont identiques ou différents et représentent chacun un groupe alkylène ayant 1 à 10 atomes de carbone, et m représente un nombre supérieur ou égal à 0, où m dans $R^1$ à $R^3$ ne valent pas simultanément 0, et une liaison avec une ligne ondulée se lie à un atome d'azote dans la formule.

3. Composition durcissable selon la revendication 1 ou 2, dans laquelle le composé acrylique (B) est un composé (b") représenté par la Formule (2") :

[Chem. 3]

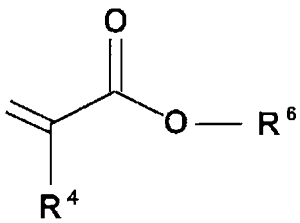

(2")

où $R^4$ est H ou $CH_3$, et $R^6$ est un groupe représenté par la Formule (2b) :

[Chem. 4]

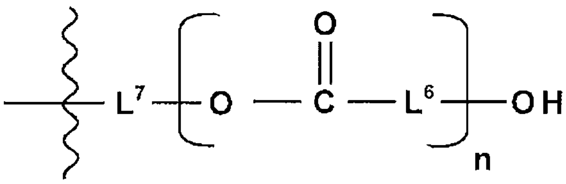

(2b)

où $L^6$ et $L^7$ sont identiques ou différents et représentent chacun un groupe alkylène ayant 1 à 10 atomes de carbone, et n représente un nombre supérieur ou égal à 0, et une liaison avec une ligne ondulée se lie à un atome d'oxygène dans la Formule (2").

4. Composition durcissable selon l'une quelconque des revendications 1 à 3, dans laquelle le composé polyisocyanate (C) est un composé (c) représenté par la Formule (3) :

[Chem. 5]

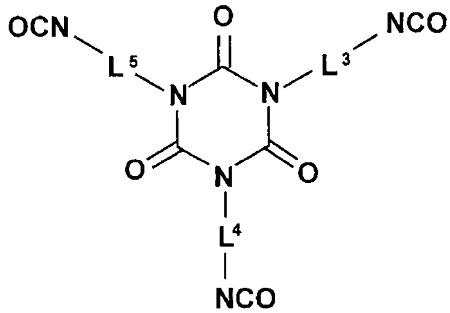

(3)

où $L^3$ à $L^5$ sont identiques ou différents et représentent chacun un groupe alkylène ayant 1 à 10 atomes de carbone.

5. Composition durcissable selon l'une quelconque des revendications 1 à 4, dans laquelle le composé acrylique (B) est contenu dans une plage allant de 1 à 70 parties en poids par rapport à 100 parties en poids du composé polyol (A).

6. Composition durcissable selon l'une quelconque des revendications 1 à 5, dans laquelle le composé polyol (A) et le composé acrylique (B) sont contenus dans un rapport tel que le rapport molaire des groupes hydroxy du composé polyol (A) aux groupes hydroxy du composé acrylique (A) (premier/second) soit compris entre 1,5 et 50.

7. Composition durcissable selon l'une quelconque des revendications 1 à 6, dans laquelle le rapport équivalent (NCO/OH) des groupes NCO du composé polyisocyanate (C) aux groupes OH dans le composé polyol (A) et le composé acrylique (B) se trouve dans la plage allant de 0,2 à 2,0.

8. Composition durcissable selon l'une quelconque des revendications 1 à 7, comprenant en outre 0,1 à 0,5 partie en poids d'un dérivé de polysiloxane (E) par rapport à 100 parties en poids au total du composé polyol (A), du composé acrylique (B) et du composé polyisocyanate (C).

9. Composition durcissable selon l'une quelconque des revendications 1 à 8, dans laquelle la composition durcissable est un agent de revêtement à double durcissement.

10. Film durcissable par rayonnement énergétique actif comprenant un prépolymère d'uréthane contenant un groupe terminal (méth)acryloyle, le prépolymère d'uréthane contenant un groupe terminal (méth)acryloyle contenant, en tant que monomères constitutifs : un composé polyol (A) ayant un squelette isocyanurate ; un composé acrylique (B) contenant un groupe hydroxy ; et un composé polyisocyanate (C) ayant un squelette isocyanurate ; et le film durcissable comprenant en outre 1 à 5 parties en poids d'un initiateur de photopolymérisation (D) par rapport à 100 parties en poids au total du composé polyol (A), du composé acrylique (B) et du composé polyisocyanate (C).

11. Produit durci de la composition durcissable décrite dans l'une quelconque des revendications 1 à 9.

12. Produit durci du film durcissable par rayonnement énergétique actif décrit dans la revendication 10.

13. Produit moulé en plastique, dont au moins une partie d'une surface de substrat qui est une cible de recouvrement est recouverte d'un film de revêtement contenant le produit durci décrit dans la revendication 11 ou 12.

14. Procédé de production d'un film durcissable par rayonnement énergétique actif,

le film durcissable par rayonnement énergétique actif comprenant un prépolymère d'uréthane contenant un groupe terminal (méth)acryloyle, le prépolymère d'uréthane contenant un groupe terminal (méth)acryloyle contenant, en tant que monomères constitutifs : un composé polyol (A) ayant un squelette isocyanurate ; un composé acrylique (B) contenant un groupe hydroxy ; et un composé polyisocyanate (C) ayant un squelette isocyanurate,

le procédé comprenant le traitement thermique d’un film de revêtement contenant la composition durcissable décrite dans l’une quelconque des revendications 1 à 9.

**15.** Procédé de production d’un produit moulé en plastique, le procédé comprenant les étapes suivantes :

étape 1 : mettre le film durcissable par rayonnement énergétique actif décrit dans la revendication 10 en adhérence étroite avec une partie en retrait d’un moule, puis charger la partie en retrait du moule avec un plastique fondu ;
étape 2 : solidifier ou durcir le plastique chargé dans la partie en retrait du moule ; et
étape 3 : retirer un contenu du moule et durcir le film par irradiation d’un rayonnement énergétique actif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020169881 A
- JP 4130119 A
- JP 2011137145 A
- JP 2015530295 A
- JP 2013001897 A